# EUROPÄISCHE PATENTANMELDUNG

(11) **EP 2 378 066 A2**
(43) Veröffentlichungstag der Anmeldung: **19.10.2011**
(21) Anmeldenummer: 10191461.2
(22) Anmeldetag: 17.11.2010
(51) Int. Cl.: F01D 5/02, F01D 5/08

(54) **Rotor für eine Strömungsmaschine**

(30) Priorität: 16.04.2010 DE 102010015211
(71) Anmelder: MTU Aero Engines GmbH, 80995 München (DE)
(72) Erfinder: Stiehler, Frank, 04924, Bad Liebenwerda (DE); Borufka, Peter, 82319, Starnberg (DE)

(57) **Zusammenfassung**

Die Erfindung betrifft einen Rotor (10) für eine Strömungsmaschine, insbesondere für eine Flugzeugturbine, mit Laufschaufeln (12), die mit einem Rotorgrundkörper (16) verbunden sind und radial unterhalb ihrer Schaufelplattformen (18) Kanäle (22) zum Zuführen von Kühlluft (KL) in die Laufschaufeln (12) umfassen, wobei an einer Hochdruckseite (HD) des Rotors (12) eine Gasleiteinrichtung (24) vorgesehen ist, welche ausgebildet ist, während des Betriebs der zugeordneten Strömungsmaschine einen Heißgasstrom (HL) in die Kanäle (22) zumindest zu reduzieren und einen Eintritt von Kühlluft (KL) in die Kanäle (22) zu gestatten, wobei die Gasleiteinrichtung (24) mit dem Rotor (10) verbunden ist und ein in Umfangsrichtung des Rotors (10) ringförmig umlaufendes Sperrelement (28) umfasst, welches zum Reduzieren des Heißgasstroms (HL) zwischen Unterseiten radial innerer Schaufeldeckbänder (17) der Laufschaufeln (12) und einem Verbindungsbereich der Laufschaufeln (12) am Rotorgrundkörper (16) angeordnet ist. Die Erfindung betrifft weiterhin eine Strömungsmaschine, insbesondere Flugzeugtriebwerk, mit einem derartigen Rotor (10) sowie ein Verfahren zum Herstellen, Reparieren und/oder Überholen eines Rotors (10) für eine Strömungsmaschine.

## Beschreibung

Die Erfindung betrifft einen Rotor der im Oberbegriff des Patentanspruchs 1 angegebenen Art, eine Strömungsmaschine mit einem Rotor sowie ein Verfahren zum Herstellen, Reparieren und/oder Überholen eines Rotors für eine Strömungsmaschine.

Ein derartiger Rotor für eine Strömungsmaschine umfasst Laufschaufeln, die mit einem Rotorgrundkörper verbunden sind und radial unterhalb ihrer Schaufelplattformen Kanäle zum Zuführen von Kühlluft in die Laufschaufeln umfassen. Zur Laufschaufelkühlung wird in der Regel an geeigneter Stelle aus einem Verdichter der Strömungsmaschine entnommene Druckluft verwendet. Während des Betriebs einer mit einem derartigen Rotor versehenen Strömungsmaschine muss jedoch eine zuverlässige Abgrenzung und Führung der Kühlluft- und Heißgasströme gewährleistet sein. Um einen Heißgaseinzug in kühlluftführende Kanäle und Räume zu verhindern, wird üblicherweise an einer Hochdruckseite des Rotors eine Gasleiteinrichtung angeordnet, welche während des Betriebs der Strömungsmaschine einerseits einen Heißgasstrom in die Kanäle vollständig unterbindet oder zumindest weitgehend reduziert und andererseits einen Eintritt von Kühlluft in die Kanäle gestattet.

Die DE 44 22 965 A1 offenbart beispielsweise eine Strömungsmaschine, bei welcher ein Umlenkblech zum Abschirmen des Heißgasstroms sowie zum Führen des Kühlluftstroms durch eine Laufschaufel an einem stromaufwärts des Rotors angeordneten Stator befestigt ist.

Aufgabe der vorliegenden Erfindung ist es, einen Rotor für eine Strömungsmaschine bereitzustellen, welcher eine verbesserte Heißgas- und Kühlluftführung besitzt. Weitere Aufgaben der Erfindung bestehen darin, eine Strömungsmaschine mit einem derartigen Rotor sowie ein Verfahren zum Herstellen, Reparieren und/oder Überholen eines derartigen Rotors für eine Strömungsmaschine bereitzustellen.

Die Aufgaben werden erfindungsgemäß durch einen Rotor mit den Merkmalen des Patentanspruchs 1, durch eine Strömungsmaschine gemäß Patentanspruch 13 sowie durch ein Verfahren gemäß Patentanspruch 14 gelöst. Vorteilhafte Ausgestaltungen der Erfindung sind in den jeweiligen Unteransprüchen angegeben, wobei vorteilhafte Ausgestaltungen des Rotors als vorteilhafte Ausgestaltungen der Strömungsmaschine bzw. des Verfahrens und umgekehrt anzusehen sind.

Ein Rotor, welcher eine verbesserte Heißgas- und Kühlluftführung besitzt, ist erfindungsgemäß dadurch geschaffen, dass die Gasleiteinrichtung mit dem Rotor verbunden ist und ein in Umfangsrichtung des Rotors ringförmig umlaufendes Sperrelement umfasst, welches zum Reduzieren des Heißgasstroms zwischen Unterseiten radial innerer Schaufeldeckbänder der Laufschaufeln und einem Verbindungsbereich der Laufschaufeln am Rotorgrundkörper angeordnet ist. Mit anderen Worten ist die Gasleiteinrichtung bzw. das Sperrelement im Unterschied zum Stand der Technik an der triebwerksbezogenen Frontseite des Rotors mit diesem verbunden und rotiert während des Betriebs der Strömungsmaschine mit diesem mit. Die Schaufeldeckbänder dienen zum teilweisen Begrenzen eines Strömungs- bzw. Gaskanals der Strömungsmaschine, wobei die Laufschaufeln grundsätzlich auch ein radial äußeres Schaufeldeckband aufweisen können. Das Sperrelement, welches beispielsweise plattenförmig ausgebildet sein kann, verhindert oder reduziert zumindest weitgehend das ansonsten ungehinderte Durchströmung des Heißgases aus dem Gaskanal der Strömungsmaschine in die Kanäle des Rotors. Es bildet somit einerseits eine Heißgas-Barriere, erlaubt andererseits aber weiterhin das Eintreten von Kühlluft in die Kanäle.

Aufgrund seiner ringförmigen Ausgestaltung und seiner vergleichsweise geringen radialen Erstreckung zwischen den Unterseiten der Schaufeldeckbänder und dem Verbindungsbereich der Laufschaufeln am Rotorgrundkörper besitzt das Sperrelement zudem eine vergleichsweise geringe bewegte Masse. Aufgrund seines konstruktiv einfachen Aufbaus besitzt das Sperrelement zudem eine sehr gute strukturmechanische Integrität. Darüber hinaus ist durch die erfindungsgemäße Ausgestaltung der Gasleiteinrichtung ein stabiler und sicherer Betrieb des Rotors gewährleistet, da keine relativ zum Rotor beweglichen Bauteile vorhanden sind. Aufgrund des einfachen konstruktiven Aufbaus ist der Rotor zudem entsprechend einfach und kostengünstig in der Herstellung und kann auch besonders einfach und kostengünstig repariert oder überholt werden.

In einer vorteilhaften Ausgestaltung der Erfindung ist vorgesehen, dass das Sperrelement mit den Unterseiten der radial inneren Schaufeldeckbänder der Laufschaufeln verbunden ist und/oder mehrere einteilig mit den Laufschaufeln ausgebildete Sperrelementsegmente umfasst und/oder im Verbindungsbereich der Laufschaufeln am Rotorgrundkörper festgelegt ist. Hierdurch ist eine hohe konstruktive Freiheit gegeben, so dass der Rotor flexibel an unterschiedliche Anforderungsprofile, Einsatzzwecke und Strömungsgegebenheiten angepasst werden kann.

Weitere Vorteile ergeben sich, indem das Sperrelement stoffschlüssig und/oder formschlüssig und/oder kraftschlüssig mit den Unterseiten der radial inneren Schaufeldeckbänder verbunden ist. Dies erlaubt eine flexible, mechanisch stabile und heißgastolerante Anbindung des Sperrelements an den Rotor.

In einer weiteren vorteilhaften Ausgestaltung der Erfindung ist vorgesehen, dass das Sperrelement zwischen 20% und 90%, insbesondere zwischen 30% und 60%, der Eintrittsflächen der Kanäle abdeckt. Mit anderen Worten ist vorgesehen, dass das Sperrelement 20%, 25%, 30%, 35%, 40%, 45%, 50%, 55%, 60%, 65%, 70%, 75%, 80%, 85% oder 90% der einzelnen Eintrittsflächen der Kanäle überdeckt und vor Heißgaseintritt abschirmt. Insbesondere hat es sich als vorteilhaft gezeigt, wenn das Sperrelement 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59% oder 60% der Eintrittsflächen verdeckt, da hierdurch für die meisten Anwendungen einerseits eine optimale Heißgasabschirmung und andererseits eine optimale Kühlluftzufuhr gewährleistet wird.

Weitere Vorteile ergeben sich, wenn das Sperrelement wenigstens eine Durchtrittsöffnung umfasst, durch welche Kühlluft in die Kanäle eintreten kann. Dies ist insbesondere dann von Vorteil, wenn sich das Sperrelement über die gesamte radiale Höhe der Kanäle erstreckt. Daneben bietet eine derartige Durchgangsöffnung eine weitere einfache Möglichkeit zur optimalen Strömungseinstellung im Hinblick auf Heißgasabschirmung und Kühlluftdurchlass.

Eine besonders vorteilhafte Leitung der Heißgas- und Kühlluftströme wird in weiterer Ausgestaltung dadurch erzielt, dass jeweils eine Durchtrittsöffnung für mindestens zwei benachbarte Kanäle vorgesehen ist.

Eine besonders betriebssichere Anbindung an den Rotor ist in weiterer Ausgestaltung der Erfindung dadurch ermöglicht, dass die Gasleiteinrichtung wenigstens ein Sicherungselement, insbesondere einen Sicherungsdraht, umfasst, mittels welchem eine axiale und/oder radiale Relativbewegung des Sperrelements gegenüber dem Rotorgrundkörper verhindert wird.

In einer weiteren vorteilhaften Ausgestaltung der Erfindung ist vorgesehen, dass die Gasleiteinrichtung wenigstens eine Auswuchteinrichtung umfasst, mittels welcher der Rotor statisch und/oder dynamisch auswuchtbar ist. Dies stellt eine konstruktiv einfache Möglichkeit dar, etwaige Unwuchten des Rotors zu beseitigen, die ansonsten zu Vibrationen, Geräuschen und hohem Verschleiß führen könnten. Die Auswuchteinrichtung ist vorteilhaft derart ausgebildet, dass der Massenausgleich positiv oder negativ erfolgen kann. Beim positiven Ausgleich können eine oder mehrere Ausgleichsmassen beispielsweise durch Anschweißen, Ankleben oder Anschrauben an der Auswuchteinrichtung der Gasleiteinrichtung befestigt werden. Beim negativen Ausgleich kann Masse z. B. durch Bohren, Schleifen oder Fräsen von der Auswuchteinrichtung abgetragen werden.

Indem die Auswuchteinrichtung mehrere, in Umfangsrichtung voneinander beabstandet und/oder radial unterhalb des Verbindungsbereichs der Laufschaufeln angeordnete Aufnahmen zum Festlegen von Ausgleichsmassen umfasst, ist eine besonders effiziente und bauraumsparende Möglichkeit zum Befestigen von Ausgleichsmassen gegeben.

In einer weiteren vorteilhaften Ausgestaltung der Erfindung ist vorgesehen, dass die Gasleiteinrichtung und/oder zumindest das Sperrelement aus einem hochtemperaturbeständigen Material, insbesondere einer Nickelbasislegierung und/oder einem Titanaluminid, besteht. Auf diese Weise kann der Rotor problemlos in Turbinenstufen von Flugzeugtriebwerken verwendet werden. Besonders bevorzugt ist insbesondere die Verwendung von hochtemperaturfesten und leichten Materialien wie beispielsweise Titanaluminid.

Weitere Vorteile ergeben sich, indem das Sperrelement wenigstens eine Anlagefläche zur axialen und/oder radialen Anlage am Rotorgrundkörper und/oder an den Laufschaufeln umfasst. Hierdurch kann die Dichtigkeit der Gasleiteinrichtung gegenüber Heißgas zusätzlich gesteigert werden.

In einer weiteren vorteilhaften Ausgestaltung der Erfindung ist vorgesehen, dass die Laufschaufeln lösbar und/oder stoffschlüssig mit dem Rotorgrundkörper verbunden sind. Hierdurch kann der Rotor besonders flexibel in montierter Bauweise und/oder in integraler BLISK-(Bladed Disk) bzw. BLING-(Bladed Ring) Bauweise hergestellt werden.

Ein weiterer Aspekt der Erfindung betrifft eine Strömungsmaschine mit einem Rotor nach einem der vorhergehenden Ausführungsbeispiele. Die sich hieraus ergebenden Merkmale und deren Vorteile sind den vorhergehenden Beschreibungen zu entnehmen.

Ein weiterer Aspekt der Erfindung betrifft ein Verfahren zum Herstellen, Reparieren und/oder Überholen eines Rotors für eine Strömungsmaschine, insbesondere für eine Flugzeugturbine. Dabei ist erfindungsgemäß vorgesehen, dass an einer Hochdruckseite des Rotors eine Gasleiteinrichtung drehfest mit dem Rotor verbunden wird, wobei die Gasleiteinrichtung ein in Umfangsrichtung des Rotors ringförmig umlaufendes Sperrelement umfasst, welches zwischen Unterseiten radial innerer Schaufeldeckbänder von Laufschaufeln und einem Verbindungsbereich der Laufschaufeln an einem Rotorgrundkörper des Rotors angeordnet wird und welches während des Betriebs der Strömungsmaschine einen Heißgasstrom in Kanäle, die zum Zuführen von Kühlluft radial unterhalb von Schaufelplattformen der Laufschaufeln ausgebildet sind, zumindest reduziert sowie einen Eintritt von Kühlluft in die Kanäle gestattet. Die sich hieraus ergebenden Vorteile sind den vorhergehenden Beschreibungen zu entnehmen.

In einer weiteren vorteilhaften Ausgestaltung der Erfindung ist vorgesehen, dass die Gasleiteinrichtung auf den Rotorgrundkörper aufgeschrumpft und/oder stoffschlüssig mit den Unterseiten der radial inneren Schaufeldeckbänder der Laufschaufeln verbunden und/oder mit dem Rotor vernietet wird. Hierdurch kann die Gasleiteinrichtung variabel und betriebssicher mit dem Rotor verbunden werden.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Dabei zeigt:
- Fig. 1: eine schematische und perspektivische Schnittansicht der Hochdruckseite eines erfindungsgemäßen Rotors, welcher eine Gasleiteinrichtung gemäß einem ersten Ausführungsbeispiel umfasst;
- Fig. 2: eine schematische und ausschnittsweise Ansicht der Niederdruckseite des in Fig. 1 gezeigten Rotors;
- Fig. 3: eine schematische seitliche Schnittansicht des in Fig. 1 und Fig. 2 gezeigten Rotors;
- Fig. 4: eine schematische seitliche Schnittansicht des erfindungsgemäßen Rotors, welcher eine alternative Gasleiteinrichtung umfasst;
- Fig. 5: eine perspektivische Schnittansicht der Niederdruckseite des in Fig. 4 gezeigten Rotors;
- Fig. 6: eine weitere schematische seitliche Schnittansicht des in Fig. 4 und Fig. 5 gezeigten Rotors; und
- Fig. 7: eine schematische Perspektivansicht der Hochdruckseite des Rotors, wobei ein Sperrelement der alternativen Gasleiteinrichtung transparent dargestellt ist.

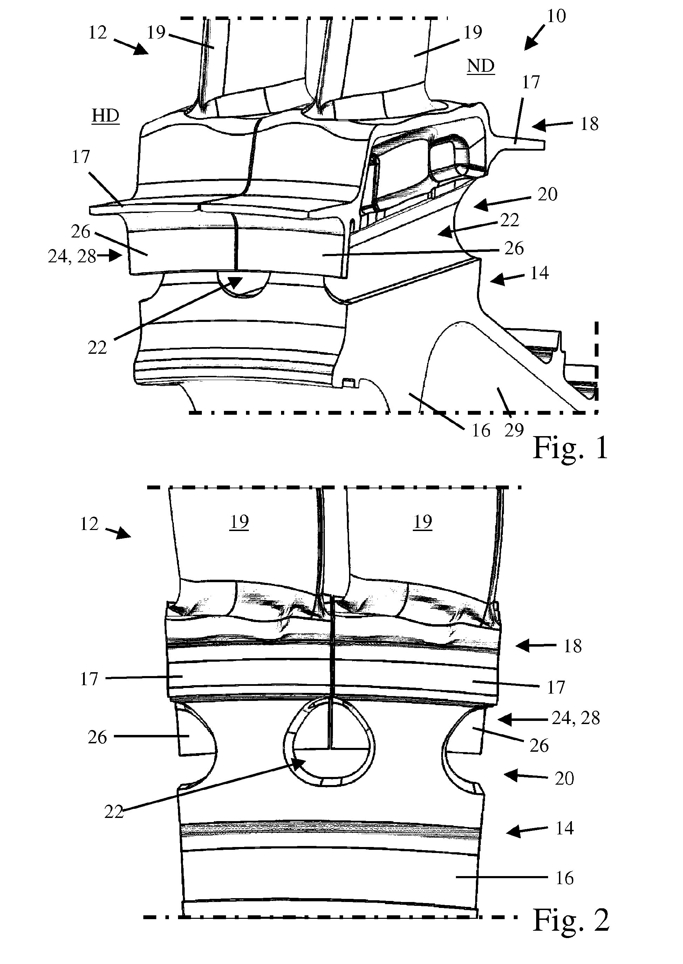

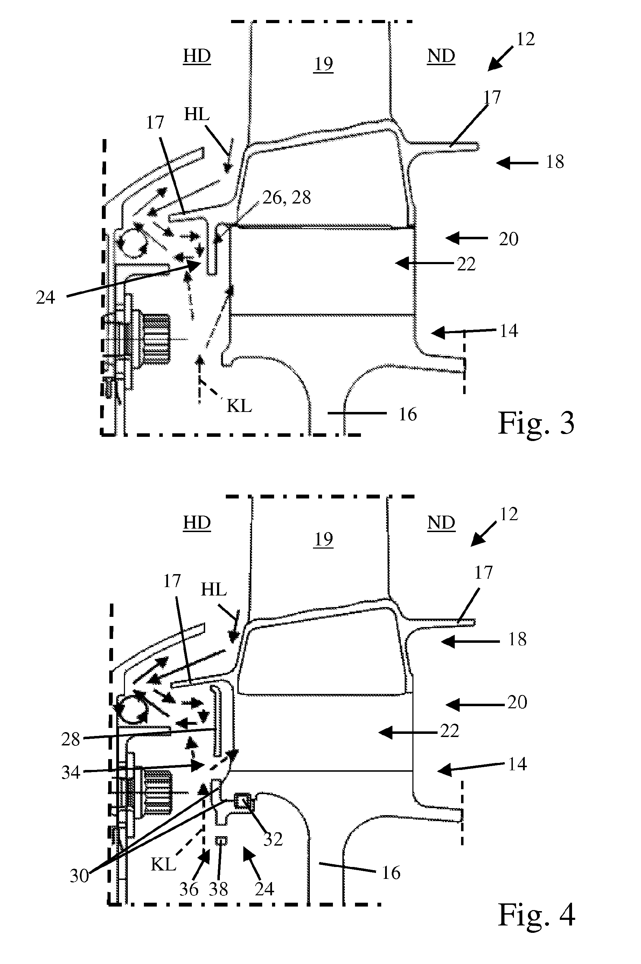

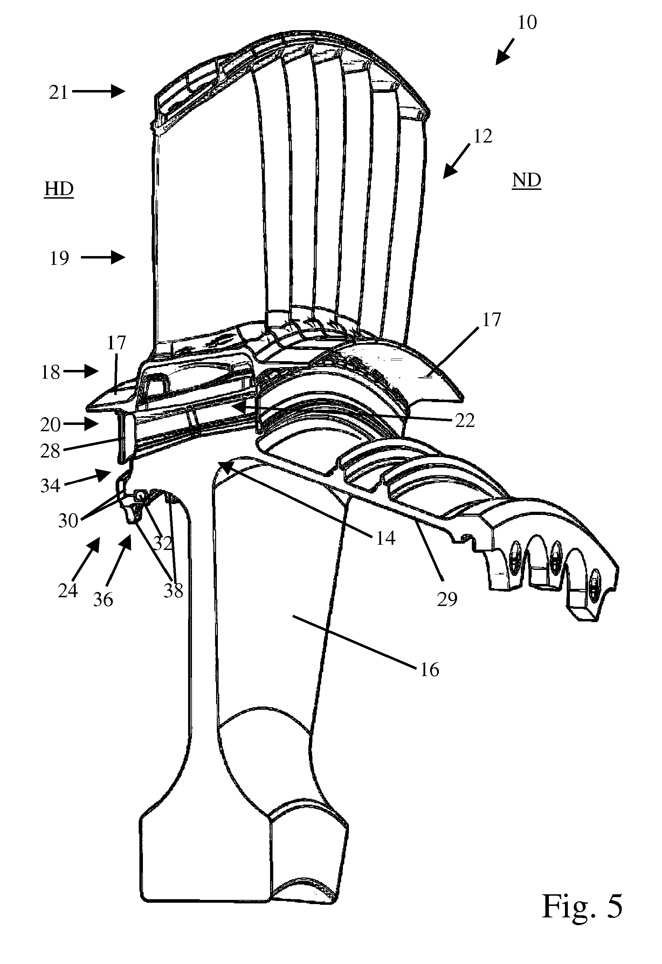

Fig. 1 zeigt eine schematische und perspektivische Schnittansicht der Hochdruckseite HD eines erfindungsgemäßen Rotors 10 für eine Flugzeugturbine (nicht abgebildet) und wird im Folgenden in Zusammenschau mit Fig. 2 erläutert werden, wobei in Fig. 2 eine schematische und ausschnittsweise Ansicht der Niederdruckseite ND des in Fig. 1 gezeigten Rotors 10 dargestellt ist. Der Rotor 10, der vorliegend als so genannte BLISK ausgebildet ist, umfasst mehrere Laufschaufeln 12, von denen vorliegend zwei abgebildet sind. Jede Laufschaufel 12 ist über ihren Schaufelfuß 14 in an sich bekannter Weise stoffschlüssig, beispielsweise durch Reibschweißen, mit einem scheibenförmigen Rotorgrundkörper 16 verbunden. Zwischen einer Schaufelplattform 18, welche ein radial inneres Schaufeldeckband 17 umfasst, und dem Schaufelfuß 14 umfasst jede Laufschaufel 12 im Bereich ihres Schaufelhalses 20 mindestens einen sich zwischen der Hochdruckseite HD und der Niederdruckseite ND des Rotors 10 erstreckenden Kanal 22, durch welchen Kühlluft KL (s. Fig. 3) in innere Kühlkanäle (nicht gezeigt) der Laufschaufeln 12 geleitet werden kann. Im vorliegenden Beispiel werden die Kanäle 22 jeweils durch miteinander korrespondierende seitliche Aussparungen in den Schaufelhälsen 20 benachbarter Laufschaufeln 12 gebildet. Grundsätzlich kann vorgesehen sein, dass jede Laufschaufel 12 mindestens einen vollständigen Kanal 22 umfasst. Radial oberhalb der Schaufelplattformen 18 umfasst jede Laufschaufel 12 ein Schaufelblatt 19 sowie gegebenenfalls ein radial äußeres Schaufeldeckband 21 (s. Fig. 5). Auf seiner Niederdruckseite ND ist der Rotorgrundkörper 16 weiterhin mit einer Trommel 29 verbunden.

An seiner Hochdruckseite ist der Rotor 10 mit einer Gasleiteinrichtung 24 gemäß einem ersten Ausführungsbeispiel verbunden, welche während des Betriebs der zugeordneten Strömungsmaschine einen Heißgasstrom HL in die Kanäle 22 zumindest weitgehend reduziert, einen Eintritt von Kühlluft KL in die Kanäle 22 jedoch gestattet (vgl. Fig. 3). Die Gasleiteinrichtung 24 umfasst hierzu Sperrelementsegmente 26, die jeweils einteilig mit den Laufschaufeln 12 ausgebildet sind und sich ausgehend von einer Unterseite der radial innerer Schaufeldeckbänder 17 radial nach innen in Richtung der Schaufelfüße 14 bzw. des Verbindungsbereichs der Laufschaufeln 12 am Rotorgrundkörper 16 erstrecken. Die Sperrelementsegmente 26 bilden somit im montierten Zustand ein in Umfangsrichtung des Rotors 10 ringförmig umlaufendes Sperrelement 28. Dabei kann in Abhängigkeit der gewünschten Strömungsführung grundsätzlich vorgesehen sein, dass die Sperrelementsegmente 26 aneinander angrenzen oder - beispielsweise durch Schweißen - gasdicht miteinander verbunden sind. In Fig. 2 ist erkennbar, dass das Sperrelement 28 etwa 50% der Eintrittsflächen der Kanäle 22 verdeckt bzw. vor Heißgas HL abschirmt. Die Sperrelementsegmente 26 bestehen aus einem temperaturbeständigem Material, beispielsweise Titanaluminid, und können für jeden Rotor 10 geometrisch spezifisch ausgelegt und dimensioniert werden.

Fig. 3 zeigt eine schematische seitliche Schnittansicht des in Fig. 1 und Fig. 2 gezeigten Rotors 10 und verdeutlicht die durch die Gasleiteinrichtung 24 bewirkte Strömungsbeeinflussung während des Betriebs der zugeordneten Strömungsmaschine. Das aus dem Gaskanal radial oberhalb der Schaufelplattformen 18 stammende Heißgas, das durch die mit HL bezeichneten Pfeile symbolisiert wird, wird beim Auftreffen auf das Sperrelement 28 bzw. auf die einzelnen Sperrelementsegmente 26 umgelenkt und am Eintreten in die Kanäle 22 und folgende temperatursensible Teile des Rotors 10 gehindert. Demgegenüber kann die aus dem radial unterhalb des Kanals 22 stammende und durch die mit KL bezeichneten Pfeile symbolisierte Kühlluft weitgehend ungehindert in den Kanal 22 eintreten. Ein Teil der Kühlluft KL wird zudem dafür verwendet, das Heißgas HL radial wieder in Richtung des Gaskanals der Strömungsmaschine zu drücken.

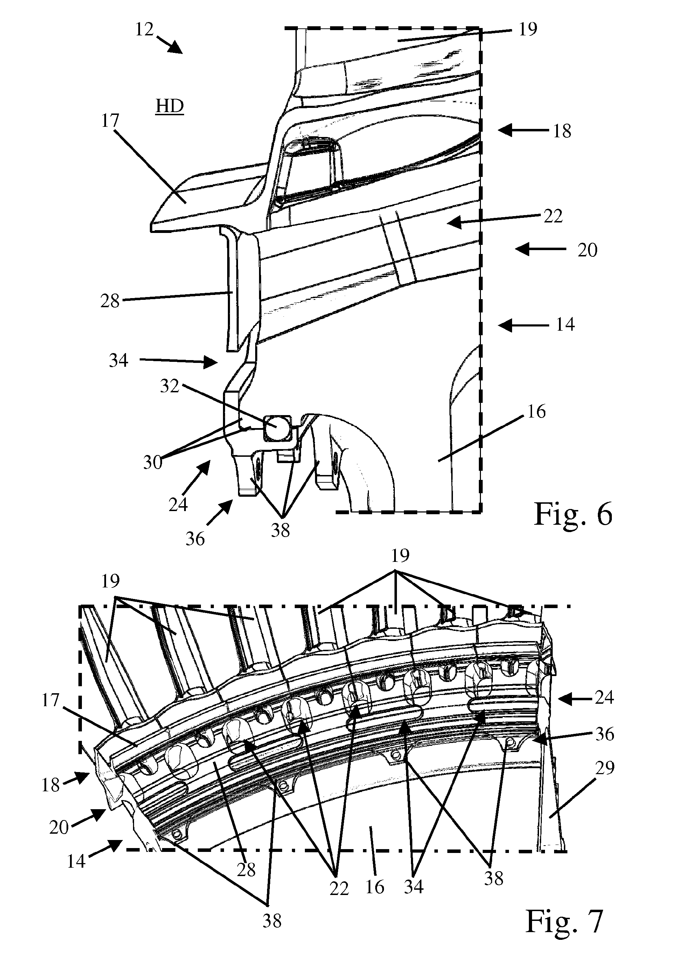

Fig. 4 bis Fig. 7 zeigen unterschiedliche Ansichten des erfindungsgemäßen Rotors 10 mit einer alternativen Gasleiteinrichtung 24 und werden im Folgenden in Zusammenschau beschrieben werden. In Fig. 4 ist hierbei eine schematische seitliche Schnittansicht des erfindungsgemäßen Rotors 10 abgebildet, während Fig. 5 eine perspektivische Schnittansicht der Niederdruckseite ND des Rotors 10, Fig. 6 eine weitere schematische seitliche Schnittansicht des Rotors 10 und Fig. 7 eine schematische Perspektivansicht der Hochdruckseite HD des Rotors 10 zeigen. In Fig. 7 ist das Sperrelement 28 der Gasleiteinrichtung 24 aus Gründen der Übersichtlichkeit transparent dargestellt. Der allgemeine Aufbau des Rotors 10 entspricht grundsätzlich demjenigen des in Fig. 1 bis Fig. 3 gezeigten Rotors 10.

Im Unterschied zum Rotor 10 gemäß dem ersten Ausführungsbeispiel umfasst die Gasleiteinrichtung 24 ein durchgehendes, ringförmiges Sperrelement 28, welches sich vollständig zwischen den Unterseiten der radial inneren Schaufeldeckbänder 17 und dem Verbindungsbereich der Laufschaufeln 14 am Rotorgrundkörper 16 erstreckt. Das Sperrelement 28 besitzt sowohl axiale als auch radiale Anlageflächen 30 und ist im Verbindungsbereich der Laufschaufeln 14 drehfest am Rotorgrundkörper 16 festgelegt. Hierzu ist die Gasleiteinrichtung 24 auf den Rotor 10 aufgeschrumpft und umfasst ein als Sicherungsdraht ausgebildetes Sicherungselement 32. Im Unterschied zum vorhergehenden Ausführungsbeispiel ist das Sperrelement 28 nicht stoffschlüssig mit den Schaufeldeckbändern 17 verbunden, sondern liegt lediglich an diesen an. Grundsätzlich kann das Sperrelement 28 aber auch mit den Schaufeldeckbändern 17 verbunden - beispielsweise verschweißt oder vernietet - werden.

Um einen Eintritt von Kühlluft KL in die Kanäle 22 zu ermöglichen, umfasst das Sperrelement 28 in Umfangsrichtung mehrere längliche Durchtrittsöffnungen 34 (s. Fig. 7), die radial unterhalb der Eintrittsöffnungen der Kanäle 22 angeordnet sind. Jeweils eine Durchtrittsöffnung 34 versorgt mindestens zwei benachbarte Kanäle 22 mit Kühlluft KL.

Darüber hinaus umfasst die alternative Gasleiteinrichtung 24 eine Auswuchteinrichtung 36, mittels welcher der Rotor 10 statisch und dynamisch ausgewuchtet werden kann. Die Auswuchteinrichtung 36 weist zu diesem Zweck mehrere, in Umfangsrichtung voneinander beabstandet und radial unterhalb des Verbindungsbereichs der Laufschaufeln 12 angeordnete Aufnahmen 38 zum Festlegen von Ausgleichsmassen (nicht gezeigt) auf.

## Patentansprüche

1. Rotor (10) für eine Strömungsmaschine, insbesondere für eine Flugzeugturbine, mit Laufschaufeln (12), die mit einem Rotorgrundkörper (16) verbunden sind und radial unterhalb ihrer Schaufelplattformen (18) Kanäle (22) zum Zuführen von Kühlluft (KL) in die Laufschaufeln (12) umfassen, wobei an einer Hochdruckseite (HD) des Rotors (12) eine Gasleiteinrichtung (24) vorgesehen ist, welche ausgebildet ist, während des Betriebs der zugeordneten Strömungsmaschine einen Heißgasstrom (HL) in die Kanäle (22) zumindest zu reduzieren und einen Eintritt von Kühlluft (KL) in die Kanäle (22) zu gestatten, **dadurch gekennzeichnet, dass** die Gasleiteinrichtung (24) mit dem Rotor (10) verbunden ist und ein in Umfangsrichtung des Rotors (10) ringförmig umlaufendes Sperrelement (28) umfasst, welches zum Reduzieren des Heißgasstroms (HL) zwischen Unterseiten radial innerer Schaufeldeckbänder (17) der Laufschaufeln (12) und einem Verbindungsbereich der Laufschaufeln (12) am Rotorgrundkörper (16) angeordnet ist.

2. Rotor (10) nach Anspruch 1, **dadurch gekennzeichnet, dass** das Sperrelement (28) mit den Unterseiten der radial inneren Schaufeldeckbänder (17) der Laufschaufeln (12) verbunden ist und/oder mehrere einteilig mit den Laufschaufeln (12) ausgebildete Sperrelementsegmente (26) umfasst und/oder im Verbindungsbereich der Laufschaufeln (12) am Rotorgrundkörper (16) festgelegt ist.

3. Rotor (10) nach Anspruch 2, **dadurch gekennzeichnet, dass** das Sperrelement (28) stoffschlüssig und/oder formschlüssig und/oder kraftschlüssig mit den Unterseiten der radial inneren Schaufeldeckbänder (17) verbunden ist.

4. Rotor (10) nach einem der Ansprüche 1 bis 3, **dadurch gekennzeichnet, dass** das Sperrelement (28) zwischen 20% und 90%, insbesondere zwischen 30% und 60%, der Eintrittsflächen der Kanäle (22) abdeckt.

5. Rotor (10) nach einem der Ansprüche 1 bis 4, **dadurch gekennzeichnet, dass** das Sperrelement (28) wenigstens eine Durchtrittsöffnung (34) umfasst, durch welche Kühlluft in die Kanäle (22) eintreten kann.

6. Rotor (10) nach Anspruch 5, **dadurch gekennzeichnet, dass** jeweils eine Durchtrittsöffnung (34) für mindestens zwei benachbarte Kanäle (22) vorgesehen ist.

7. Rotor (10) nach einem der Ansprüche 1 bis 6, **dadurch gekennzeichnet, dass** die Gasleiteinrichtung (24) wenigstens ein Sicherungselement (32), insbesondere einen Sicherungsdraht, zum Verhindern einer axialen und/oder radialen Relativbewegung des Sperrelements (28) gegenüber dem Rotorgrundkörper (14) umfasst.

8. Rotor (10) nach einem der Ansprüche 1 bis 7, **dadurch gekennzeichnet, dass** die Gasleiteinrichtung (24) wenigstens eine Auswuchteinrichtung (36) umfasst, mittels welcher der Rotor (10) statisch und/oder dynamisch auswuchtbar ist.

9. Rotor (10) nach Anspruch 8, **dadurch gekennzeichnet, dass** die Auswuchteinrichtung (36) mehrere, in Umfangsrichtung voneinander beabstandet und/oder radial unterhalb des Verbindungsbereichs der Laufschaufeln (12) angeordnete Aufnahmen (38) zum Festlegen von Ausgleichsmassen umfasst.

10. Rotor (10) nach einem der Ansprüche 1 bis 9, **dadurch gekennzeichnet, dass** die Gasleiteinrichtung (24) und/oder zumindest das Sperrelement (28) aus einem hochtemperaturbeständigen Material, insbesondere einer Nickelbasislegierung und/oder einem Titanaluminid, besteht.

11. Rotor (10) nach einem der Ansprüche 1 bis 10, **dadurch gekennzeichnet, dass** das Sperrelement (28) wenigstens eine Anlagefläche (30) zur axialen und/oder radialen Anlage am Rotorgrundkörper (16) und/oder an den Laufschaufeln (12) umfasst.

12. Rotor (10) nach einem der Ansprüche 1 bis 11, **dadurch gekennzeichnet, dass** die Laufschaufeln (12) lösbar und/oder stoffschlüssig mit dem Rotorgrundkörper (16) verbunden sind.

13. Strömungsmaschine, insbesondere Flugzeugtriebwerk, mit einem Rotor (10) nach einem der Ansprüche 1 bis 12.

14. Verfahren zum Herstellen, Reparieren und/oder Überholen eines Rotors (10) für eine Strömungsmaschine, insbesondere für eine Flugzeugturbine, bei welchem an einer Hochdruckseite (HD) des Rotors (10) eine Gasleiteinrichtung (24) drehfest mit dem Rotor (10) verbunden wird, wobei die Gasleiteinrichtung (24) ein in Umfangsrichtung des Rotors (10) ringförmig umlaufendes Sperrelement (28) umfasst, welches zwischen Unterseiten radial innerer Schaufeldeckbänder (17) von Laufschaufeln (12) und einem Verbindungsbereich der Laufschaufeln (12) an einem Rotorgrundkörper (16) des Rotors (10) angeordnet wird und welches während des Betriebs der Strömungsmaschine einen Heißgasstrom (HL) in Kanäle (22), die zum Zuführen von Kühlluft (KL) radial unterhalb von Schaufelplattformen (18) der Laufschaufeln (12) ausgebildet sind, zumindest reduziert sowie einen Eintritt von Kühlluft (KL) in die Kanäle (22) gestattet.

15. Verfahren nach Anspruch 14, **dadurch gekennzeichnet, dass** die Gasleiteinrichtung (24) auf den Rotorgrundkörper (16) aufgeschrumpft und/oder stoffschlüssig mit den Unterseiten der radial inneren Schaufeldeckbänder (17) der Laufschaufeln (12) verbunden und/oder mit dem Rotor (10) vernietet wird.
